Europäisches Patentamt

European Patent Office

Office européen des brevets

(19)

(11) Veröffentlichungsnummer: **0 207 995**
**B1**

(12) # EUROPÄISCHE PATENTSCHRIFT

(45) Veröffentlichungstag der Patentschrift: **22.11.90**

(21) Anmeldenummer: **85905944.6**

(22) Anmeldetag: **01.08.85**

(86) Internationale Anmeldenummer:
**PCT/SU85/00067**

(87) Internationale Veröffentlichungsnummer:
**WO 86/04052 17.07.86 Gazette 86/17**

(51) Int. Cl.⁵: **C 04 B 5/02,** B 01 J 2/00,
C 21 B 3/06

(54) GRANULIERUNGSANLAGE METALLURGISCHER SCHMELZE.

(30) Priorität: **28.12.84 SU 3825249**

(43) Veröffentlichungstag der Anmeldung:
**14.01.87 Patentblatt 87/03**

(45) Bekanntmachung des Hinweises auf die
Patenterteilung:
**22.11.90 Patentblatt 90/47**

(84) Benannte Vertragsstaaten:
**AT BE DE IT LU NL**

(56) Entgegenhaltungen:
**FR-A- 410 377**
**FR-A- 440 737**
**FR-A- 1 387 770**
**JP-B-5 636 138**
**JP-B-5 638 007**
**JP-B-5 835 943**
**LU-A- 79 466**
**SU-A- 331 820**
**SU-A- 519 403**

(73) Patentinhaber: **GOSUDARSTVENNY SOJUZNY
INSTITUT PO PROEKTIROVANIJU
METALLURGICHESKIKH ZAVODOV 'GIPROMEZ'
pr. Mira 101
Moscow, 129812 (SU)**

(72) Erfinder: **OLGINSKY, Felix Yanovich
per. Vasnetsova, 15-86
Moscow, 129090 (SU)**
Erfinder: **SHARANOV, Mikhail Alexeevich
ul. Tekhnologicheskaya, 3-19
Sverdlovsk, 620049 (SU)**

(74) Vertreter: **Finck, Dieter et al
Patentanwälte v. Füner, Ebbinghaus, Finck
Mariahilfplatz 2 & 3
D-8000 München 90 (DE)**

Courier Press, Leamington Spa, England.

EP 0 207 995 B1

**Beschreibung**

Gebiet der Technik

Die vorliegende Erfindung bezieht sich auf die Metallurgie und betrifft insbesondere eine Granulationsanlage fur metallurgische Schmelzen.

Vorangehender Stand der Technik

Es ist eine Granulationsanlage für metallurgische Schmelzen bekannt (Siehe z.B. die SU—PS Nr. 118 15 30 vom 18.04.78, Int. Kl. C 04 B 5/02, bekanntgegeben im Bulletin "Entdeckungen, Erfindungen ...", Nr. 35 vom 09.85).

Die bekannte Granulationsanlage für metallurgische Schmelzen, ggf. für eine Hochofenschlacke, enthält einen hydraulischen Granulator und eine über ihm angeordnete Rinne zum Zuführen der metallurgischen Schmelze zum Granulator. Der Granulator ist mit einer Schurre versehen, um ein Gemisch aus der granulierten Schlacke und Wasser, also eine Pulpe, in einen Pulpensammler abzuführen, der einen der Abführschurre anliegenden Bunker mit einem waagerecht angeordneten Verteilertrog, welcher im unteren Teil eine Austrittsöffnung für die Pulpe aufweist, darstellt.

Es ist eine Trommel mit einer waagericht verlaufenden Längsachse und gelochten Wänden vorhanden, die in Drehung versetzt wird. Die Trommel besitzt Schaufeln zur Verlagerung der Granalien beim Drehen der Trommel. Die Schaufeln sind an der Seitenwand der Trommel befestigt und erstrecken sich ins Innere der letzteren. Ins Innere der Trommel ist der waagerecht angeordnete Vertailertrog hineingeführt.

Unmittelbar unter der Trommel und tiefer als diese liegt ein Aufnahmbehälter für Wasser, welches durch die Trommellochung zufließt. Der Wasseraufnahmebehälter ist mit einem Uberlauf versehen, um den Wasserüberschuß zu entfernen, wenn der Wasserstand eine zulässige Höhe übersteigt.

Im Behälter ist an dessen Deckel eine senkrechte Platte angebracht, deren unteres Ende sich über dem Behälterboden in einem Abstand dazu befindet. Die senkrechte Platte stellt einen Schlackeabscheider dar und dient dazu, einen Teil des Behälters zum Sammeln von Klärwasser nach dem Ausfall von Feststoffteilchen abzugrenzen.

Es ist eine Vorrichtung zum Austragen von Granalien aus der Trommel vorhanden, die einen Förderer darstellt, welcher sich im wesentlichen innerhalb der Trommel längs ihrer Achse unmittelbar über dem waagerecht angeordneten Verteilertrog für die Pulpe befindet.

Unter dem Förderer zum Austragen der Granalien aus der Trommel ist ein weiterer Förderer vorhanden, der die Granalien zum Lager oder zum Verladeplatz befördert.

Es ist ein Ventilatorkühlturm zum Wasserkühlung vorhanden, in welchen das Klärwasser aus dem Behälter umgepumpt wird.

Es ist auch eine Vorrichtung zum Zuführen von Wasser zum Granulator vorgesehen, die eine Pumpe zum Zuführen von Klärwasser zum Ventilatorkühlturm enthält, welche an den durch den Schlackeabscheider begrenzten Teil des Behälters für Klärwasser angeschlossen ist. Unmittelbar unter dem Ventilatorkühlturm ist eine weiterer Aufnahmebehälter, und zwar für das aus dem Ventilatorkühlturm abfließende Wasser, aufgestellt.

Die Vorrichtung zum Zuführen von Wasser zum Granulator enthält auch eine weitere, an einen weiteren Behälter angeschlossene Pumpe, um dem Granulator eine ziemlich große Menge Wasser direkt für die Granulation zuzuführen.

Der Granulator, die Pulpenabführungsschurre, der Pulpensammelbehälter und die Trommel sind in ein Gehäuse mit einen Abzugsrohr eingeschlossen.

Die bekannte Granulationsanlage für metallurgische Schmelzen ist nicht betriebssicher genug, weil während des Granulationsvorganges flüssiges Metall, Schlackenkrusten, durch das Metall verschmelzte Stücke von Koks oder anderen Werkstoffen in die Schlacke gelangen können, was zu Explosionen und Unfallsituationen führen kann.

Dies erklärt sich dadurch, daß beim Gelangen der flüssiges Metall, Krusten und dgl. enthaltenden Schlacke durch die Wasserstrahlen vom Granulator auf die Oberfläche der wasserbespülten metallischen Konstruktionselemente geschlossene Wasservolumina zwischen dieser Oberfläche und der darauf geratenen Schlacke entstehen, welche bei einer Hochtemperatur rasch verdampfen und eine Explosion hervorrufen und somit zur Zerstörung der Konstruktion führen können.

Darüber hinaus besitzt die bekannte Granulationsanlage für metallurgische Schmelzen ein recht kompliziertes und sperriges geschlossenes Wasserumlaufsystem, das den Betrieb dieser Anlage erschwert und ihre Abmessungen vergrößert.

Die in dieser Anlage hergestellten Granalien weisen einen recht hohen Feuchtigkeitsgehalt auf wegen einer ziemlich andauernden Berührung der Schlacke mit Wasser bei der Granulation der Schlacke und bei der Übergabe der Pulpe über den Granulator, die Schurre, den Pulpensammler den waagerechten Vertailertrog sowie wegen deren gengenseitiger Anordnung.

Offenbarung der Erfindung

Der Erfindung liegt die Aufgabe zugrunde, eine Granulationsanlage für metallurgische Schmelzen zu schaffen, bei der Granulator, die Rinne zum Zuführen der Schlacke zum Granulator und die Trommel sowie der Wasserbehälter und die Trommel derart gegenseitig angeordnet sind, daß eine hohe Betriebssicherheit dieser Granulationsanlage bei verhältnismäßig kleinen Abmessungen und einem einfachen Aufbau gewährleistet wird.

Diese Aufgabe wird dadurch gelöst, daß bei einer Granulationsanlage für metallurgische Schmelzen, enthaltend einen Granulator mit einer Vorrichtung zum Zuführen von Wasser, eine Rinne zum Zuführen der metallurgischen Schmelze zu dem Granulator und eine Trommel mit gelochten Wänden und mit an ihrer Seitenwand angebrachten und sich in ihr Inneres erstreckenden Schaufeln zur Verlagerung von Granalien, die in Drehung versetzt wird, einen unter der Trommel angeordneten, mit einem Überlauf versehenen Wasserbehälter und eine Vorrichtung zum Austragen der Granalien aus der Trommel, erfindungsgemäß der Granulator und die Rinne im Hohlraum der Trommel untergebracht sind, wobei der untere Teil der Trommel sich im Wasserbehälter unterhalb des Überlaufes befindet. Bei einer solchen Anordnung des Granulators, der Rinne zum Zuführen der metallurgischen Schmelze zu diesem und der Trommel sowie der Trommel und des Wasserbehälters wird eine Explosionsmöglichkeit praktisch ausgeschlossen. Dies erklärt sich dadurch, daß mit den metallischen Konstruktionselementen der Granulationsanlage nur vorher zerkleinerte Teilchen der metallurgischen Schmelze in Form von Granalien in Berührung kommen, die auf die Wasseroberfläche im unteren Trommelteil gelangen und schon erstarrt sind.

Außerdem ist diese Granulationsanlage für metallurgische Schmelzen kompakt genug, weil die Rinne und der Granulator in Hohlraum der Trommel und der unters Trommelteil im Behälter untergebracht sind.

Die erfindungsgemäße Granulationsanlage für metallurgische Schmelzen erfordert kein kompli-ziertes Wasserumlaufsystem mit Absetz-behältern, Pumpen und einem Kühlturm.

Die Trommelschaufeln werden zweckmäßigerweise mit Schlitzen versehen, die senkrecht zur Trommelachse verlaufen.

Die Schlitze sorgen dafür, daß das Wasser, welches aus den Granalien bei deren Transportieren durch die Schaufeln entfernt wird, vollständig abgeführt wird.

Dadurch, daß die Schlitze der Breite jeder Schaufel nach verlaufen, d.h. in der Richtung, in welcher die Granalien herunterrieseln, wird erzielt, daß die Schlitze von selbst durch die herunterrieselnden Granalien gereinigt werden.

Es empfiehlt sich, daß innerhalb der Trommel ein Prallblech zum Dispergieren der Granalien und deren Zurückwerfen in den unteren Teil der Trommel vorgesehen ist, welcher eine Platte darstellt, die in einem nach der Seite zum Granulator hin offenen spitzen Winkel zur Trommelachse angeordnet ist.

Das genannte Prallblech gewährleistet eine Erhöhung der Betriebssicherheit der Granulationsanlage für metallurgische Schmelzen, und zwar dadurch, daß die Granalien vor ihrem Fallen ins Wasser im unteren Trommelteil zusätzlich zerkleinert werden, was auch seinerseits dazu beiträgt, daß Explosionen verhindert werden.

Gleichzeitig schützt das Prallblech die Trommelwände gegen den abreibenden Verschleiß durch die Granalien.

Es ist von Vorteil, daß die Vorrichtung zum Austragen der Granalien aus der Trommel eine geneigt angeordnete Schurre hat, deren oberer Teil im Trommelinneren untergebracht und der untere Teil nach außen aus der Trommel hinausgeführt ist.

Bei der Anordnung des Granulators und der Schurre im Hohlraum der Trommel, in der sich der Granulationsvorgang praktisch abspielt, ist eine solche Ausführung der Vorrichtung zum Austragen der Granalien aus der Trommel die günstigste, da sich im Hohlraum der Trommel nur unbegegliche Elemente befinden.

Die erwähnte Schurre ist ferner einfach und zuverlässig im Betrieb, hat keine beweglichen Elemente und erfordert keine Sonderreparaturen und Wartung während des Betriebes.

Auf diese Weise hat die gemäß der vorliegenden Erfindung ausgeführte Granulationsanlage für metallurgische Schmelzen eine hohe Betriebs-und eine vollkommene Explosionssicherheit.

Darüber hinaus ist die erfindungsgemäße Granulationsanlage für metallurgische Schmel-zen einfach im Aufbau, bequem im Betrieb und nimmt eine verhältnismäßig geringe Produktionsfläche ein, wodurch sie in Anbetracht eines Platzmangels in den Hochofenwerken neben den in Betrieb stehenden Hochöfen aufgestellt werden kann.

Kurze Beschreibung der Zeichnungen

Nachstehend wird ein konkretes Ausführungsbeispiel für die vorliegende Erfindung mit Hinweisen auf die beiliegenden Zeichnungen beschrieben. In den Zeichnungen zeigt:

Fig. 1 schematisch eine erfindungsgemäße Granulationsanlage für metallurgische Schmelzen, im Längsschnitt,

Fig. 2 dito, im Schnitt gemäß der Linie II—II in Fig. 1,

Fig. 3 schematisch eine Baueinheit A von Fig. 1 in vergrößertem Maßstab.

Beste Ausführungsform der Erfindung

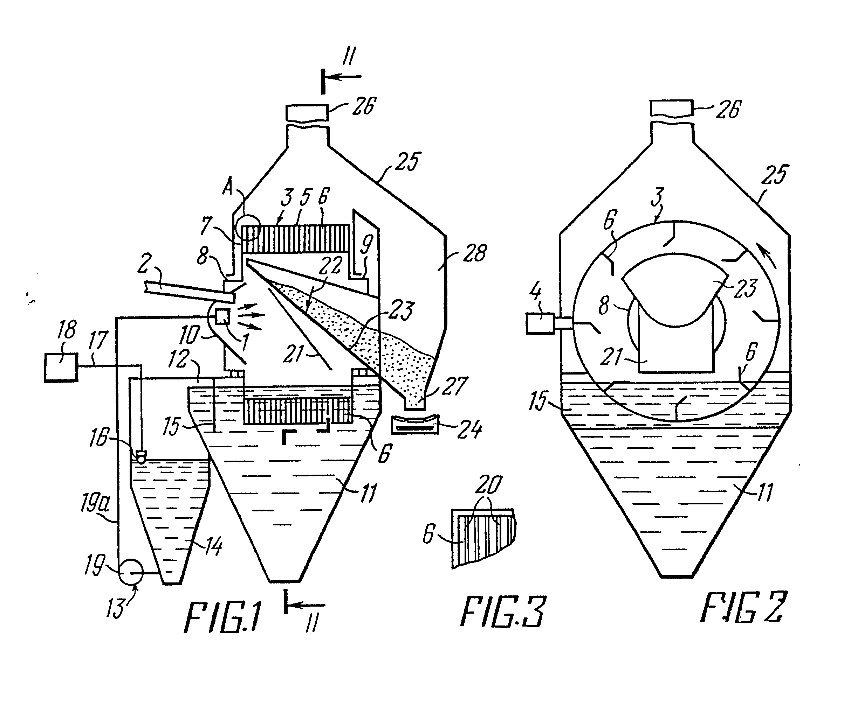

Die gemäß der vorliegenden Erfindung ausgeführte Granulationsanlage für metallurgische Schmelzen, die nachstehend der Kürze halber "die erfindungsgemäße Anlage" genannt wird, enthält einen Granulator 1 (Fig. 1) vom hydraulischen Typ in einer beliebigen bekannten für diesen. Zweck geeigneten Ausführung. In anderen Fällen können Granulatoren vom mechanischen oder Wasser-Luft-Typ verwendet worden.

Es ist eine Rinne 2 vorhanden, um dem Granulator 1 eine metallurgische Schmelze zuführen zu können, welche Schmelze in diesem Fall eine direkt aus einem (nicht gezeigten) Hochofen abgestochene Hochtemperaturschläcke ist.

Der Granulator 1 ist dazu bestimmt, au der Schlacke durch Einwirkung auf diese mit einem Wasserstrahl unter Druck Granalien zu bilden, und ist unter dem Austrittsteil, d.h. unter der (nicht gezeigten) Schnauze der Rinne 2 angeordnet.

Die erfindungsgemäße Anlage hat auch eine Trommel 3 mit einer waagerecht verlaufenden Längsachse. Die Trommel 3 wird von einem Antrieb 4 (Fig. 2), der in diesem Fall einen Elektromotor in einer beliebigen bekannten für diesen Zweck geeigneten Bauart darstellt, in Drehung versetzt.

Die Trommel 3 weist eine zylindrische Seitenwand 5 mit Löchern (Fig. 1) auf, an der sich ins Innere der Trommel 3 erstreckende Schaufeln 6 befestigt sind. Die Schaufeln 6 dienen dazu, um die sich bei der Granulation bildenden Granalien verlagern zu können. Die Anzahl der Schaufeln 6 ist in diesem Fall gleich 8. In anderen Fällen kann die Anzahl der Schaufeln 6 kleiner oder größer als 8 sein. Die Schaufeln 6 sind an der Seitenwand 5 der Trommel 3 gleichmäßig verteil angeordnet.

Wie aus der Fig. 2 ersichtlich, ist jede Schaufel 6 geknickt ausgeführt, sodaß an jeder Knickstelle eine stumpfer Winkel gebildet wird. In anderen Fällen kann die Form der Schlaufeln 6 eine andere sein.

Der Granulator 1 und die Rinne 2, und zwar ihre Schnauze, befinden sich im Hohlraum der Trommel 3, wie dies aus der Fig. 1 hervorgent.

Die Stirnwände 7 der Trommel 3 haben vorspringende Teile 8 und 9 in Form von Hohlzylindern, wobei der vorspringende Teil 8 in Fig. 1 links und der vorspringende Teil 9 rechts zu sehen ist. In den vorspringenden Teil 8 sind der Granulator 1 und die Rinne 2, genauer deren Schnauze, hineingeführt. Der Granulator 1 und die Rinne 2 sind mit einer ortsfesten Haube 10 bedeckt, die außerhalb der Trommel 3 mit beliebigen bekannten Mitteln (nicht gezeigt) befestigt ist.

Die erfindungsgemäße Anlage enthält eine Wasserbehälter 11, der direkt unter der Trommel 3 aufgestellt ist. Der Behälter 11 ist mit eine Überlauf 12 versehen, der einen Überlaufkanal zwischen der Seiten wand und dem Deckel (nicht gezeigt) des Behälters 11 darstellt. Der Überlauf 12 dient als Abfluß für den Wasserüberschuß aus dem Behälter 11.

Die Trommel 3 ist auf dem Deckel des Behälters 11 mittels Rollen gelagert (nicht gezeigt).

Der untere Teil der Trommel 3 befindet sich im Behälter 11 tiefer als der Überlauf 12.

Es ist eine Wasserzuführungsvorrichtung 13 für den Granulator 1 vorhanden, die einen zusätzlichen Behälter 14 enthält, welcher sich an den Behälter 11 von der Seite des Überlaufes 12 her anschließt. Dabei ist im Behälter 11 in der Nähe des Überlaufs 12 eine senkrechte Platte 15 vorhanden, die am Deckel des Behälters 11 befestigt ist. Die Platte 15 stellt einen Schlackeabscheider dar und ist dazu bestimmt, Schwebeteilchen im Behälter 11 beim Überlaufen des Wassers aus diesem Behälter in den Behälter 14 zurückzuhalten.

Im zusätzlichen Behälter 14 ist eine Fullstandsregler 16 einer beliebigen bekannten für diesen Zweck geeigneten Ausführung vorhande, der über eine Rohrleitung 17 an eine Druckwasserquelle 18 des externen Wasserversorgungssystems angeschlossen ist.

Die Wasserzuführungsvorrichtung 13 enthält auch eine Druckquelle 19, die eine Pumpe einer bekannten beliebigen Bauart ist und mit der gleichen Bezugsnummer 19 bezeichnet ist, sowie eine Rohrleitung 19a, über die der untere Teil des zusätzlichen Behälters 14 mit dem Granulator 1 in Verbindung steht.

Der Überlauf 12 und die Wasserzuführungsvorrichtung 15 für den Granulator 1 sorgen für den gleichbleibenden Wasserstand im Behälter 11.

Falls Granulatoren vom mechanischen oder Wasser-Luft-Typ zur Anwendung kommen, kann Wasser, welches benötigt ist, um einen gleichbleibenden Wasserstand im Behälter 11 aufrechtzuerhalten, mit der Pumpe 19 direkt in den Hohlraum der Trommel 3 am Granulator vorbei zugeführt werden.

Die Aufrechterhaltung eines gleichbleiben Wasserstandes im Behälter 11 ist notwendig, damit der untere Teil der Trommel 3 sich ständig im Wasser befindet, um die von den Schaufeln 6 zu transportierenden Granalien schnell zu kühlen.

Die Schaufeln 6 der Trommel 3 sind mit Schlitzen 20 (Fig. 3) versehen, die der Breite je einer Schaufel 6 nach verlaufen, d.h. die Schlitze 20 sind in der Richtung orientiert, in welcher die Granalien im oberen Teil der Trommel 3 von den Schaufeln herunterfallen.

Im Hohlraum der Trommel 3 ist ein Prallblech 21 (Fig. 1) vorhanden, um die Granalien zu dispergieren und sie in den unteren Teil der Trommel 3 zurückzuwerfen.

Das Prallblech 21 stellt eine Platte dar, die unter einem spitzen Winkel zur Achse der Trommel 3 angeordnet ist, der nach der Seite zum Granulator 1 hin offen ist. Das Prallblech 21 ist direkt dem Granulator 1 gegenüber angeordnet. Das Prallblech 21 ist im Hohlraum der Trommel 3 an unbeweglichen Konstruktionselementen der erfindungsgemäßen Anlage befestigt, auf deren Beschreibung hir verzichtet werden muß, um das Wesen der Erfindung nicht zu verschleiern.

Die erfindungsgemäße Anlage enthält auch eine Vorrichtung 22 zum Austragen der Granalien aus der Trommel 3, die eine geneigt angeordnete Schurre hat. Der obere Teil der Schurre 23 ist im Hohlraum 3 untergebracht, während der untere Teil nach außen aus der Trommel 3 hinausgeführt ist. Die Schnurre 23 ist innerhalb der Trommel 3 mit bekannten Mitteln, auf die hier nicht eingegangen wird, umbeweglich festgemacht.

Der Neigungswinkel der Schurre 23 muß so ausgewählt sein, daß die Granalien darüber herunterrieseln können, und zwar er muß nicht kleiner als 40° sein, im vorliegenden Fall beträgt er 40°.

Unter dem unteren Ende der Schurre 23 ist ein Förderer 24 für die Granalien aufgestellt.

Die erfindungsgemäße Anlage ist im oberen Teil mit einem Gehäuse 25 bedeckt, welches in seinem oberen Teil in ein Rohr 26 zum Hinausführen des sich bildenden Dampf-Gas-Gemisches in die Atmosphäre ausläuft.

Das untere Ende der nach Fig. 1 rechten Seitenwand des Gehäuses 25 bildet zusammen mit dem unteren Ende der Schurre 23 einen Bunker 27 zur Aufnahme von entwässerten Granalien.

Der untere Teil der Schurre 23 ist einteilig mit dem Gehäuse 25 hergestellt.

Gas Gehäuse 25 hat von der Seite des vorspringenden Teiles 9 der Stirnwand 7 der Trommel 3 her (nicht angedeutete) Wände, welche einen Kanal 28 bilden, um das Dampf-Gas-Gemisch gezielt hinauszüfuhren.

Die erfindungsgemäße Granulationsanalage für metallurgische Schmelzen arbeitet folgenderweise.

Nach Eingang eines Signals vom Abstich der Schlacke aus einem Hochofen schaltet der Maschinenführer den Antrieb 4 ein, durch den die Trommel 3, deren unterer Teil tiefer als der Überlauf 12 liegt, in Drehung in Richtung des Pfeiles in Fig. 2 versetzt wird. Der Überlauf 12 hält einen gleichbleibenden Wasserstand im Behälter 11 aufrecht mit Hilfe der Wasserzuführungsvorrichtung 13 für den Granulator 1, die gleichzeitig mit den Antrieb 4 der Trommel 3 eingeschaltet wird.

Die Pumpe 19 fördert über die Rohrleitung 19a in den Granulator 1 das für die Granulation erforderliche Wasser aus dem zusätzlichen Behälter 14, wohin ständig über den Überlauf 12 das überschüssige Klärwasser aus dem Teil des Behälters 11 überläuft, der durch die Platte 15 und die Seitenwand des Behälters 11 begrenzt ist. Der erforderliche Füllstand im zusätzlichen Behälter 14 wird durch den Füllstandsregler 16 aufrechterhalten, der mit der Wasserquelle 18 des externen Wasserversorgungssystems über die Rohrleitung 17 in Verbindung steht.

Dadurch wird in bedeutendem Maße eine Explosionsmöglichkeit ausgeschlossen, weil der untere Teil der Trommel 3 ständig ins Wasser getaucht bleibt.

Eine metallurgische Schmelze, ggb. eine Schlacke, fließt über die Rinne 2 zum Granulator 1 ab, wo sie von den Wasserstrahlen zerkleinert und dann, indem sie vom Prallblech 21 zurückgeworfen wird, zusätzlich zerkleinert wird und in Form von Granalien in den wassergefüllten unteren Teil der sich ständig um die horizontale Achse drehenden Trommel 3 gelangt.

Beim Einsatz eines mechanischen Granulators wird die Schlacke von Granulatorschaufeln zerkleinert und gelangt auf das wasserbenetzte Prallblech 21 und wird daraufhin in Form von Granalien im wassergefüllten unteren Teil der Trommel 3 endgültig gekühlt.

Beim Einsatz eines Wasser-Luft-Granulators wird die Schlacke vom Gemisch aus aus der Rohrleitung 19a zufließendem Wasser under der aus einer beliebigen externen Quelle zuströmenden Druckluft zerkleinert. Dann gelangen die Schlackenteilchen auch auf das Prallbereich 21 und weiterhin in den wassergefüllten unteren Teil der Trommel 3.

Die Granalien aus dem unteren Teil der sich drehenden Trommel 3 werden von den Schaufeln 6 aufgefangen und in den oberen Teil der Trommel 3 befördert, wovon sie in die Schurre 23 herunterrieseln. Während des Beförderns der Granalien fließt das ursprünglich in den Granalien enthaltene Wasser durch die Schlitze 20 der Schaufeln 6 aus.

Es ist vorgesehen, daß die Feuchtigkeit der Granalien zusätzlich reduziert wird, indem die Restwärme der Granalien zu deren Nachtrocknung ausgenutzt wird, was bei einer bestimmten, in dem erforderlichen Bereich mit Hilfe (nicht gezeigter) bekannter Mittel regelbaren Drehgeschwindigkeit der Trommel 3 erzielt werden kann.

Die Granalien werden aus der Schurre 23 in den Bunker 27 geschüttet und gelangen daraufhin auf den Förderer 24, mit dem sie aufs Lager oder zum Verladeplatz befördert werden.

Das sich bei der Granulation bildende Dampf-Gas-Gemisch wird über den Kanal 28 zum Rohr 26 und weiter in die Atmosphäre hinausgeführt.

Industrielle Anwendbarkeit

Mit dem höchsten Nutzeffekt kann die vorliegende Erfindung zur Granulation von Hochofenschlacken angewendet werden.

Die erfindungsgemäße Granulationsanlage für metallurgische Schmelzen läßt sich auch bei der Granulation von Schlacken aus dem Stahl-schmelz-, Ferrolegierungs- und anderen Betrie-ben anwenden.

**Patentansprüche**

1. Granulationsanlage für metallurgische Schmelzen, die eine Granulator (1) mit einer Wasserzufuhrvorrichtung (13), eine Rinne (12) zum Zuführen der metallurgischer Schmelze zu dem Granulator (1) und eine Trommel (3) mit gelochten Wänden und mit an ihrer Seitenwand angebrachten und sich in ihr Inneres erstreckenden Schaufeln (6) zur Verlagerung von Granalien, die in Drehung versetzt wird, einen unter der Trommel (3) angeordneten, mit einem Überlauf (12) versehenen Wasserbehälter (11) sowie eine Vorrichtung (22) zum Austragen der Granalien aus der Trommel (3) enthält, dadurch gekennzeichnet, daß der Granulator (1) und die Rinne (2) im Hohlraum der Trommel (3) untergebracht sind, wobei der untere Teil der Trommel (3) sich im Behälter (11) unterhalb des Überlaufs (12) befindet.

2. Granulationsanlage nach Anspruch 1, dadurch gekennzeichnet, daß die Schaufeln (6) der Trommel (3) mit Schlitzen (20) versehen sind, welche senkrecht zur Trommel achse verlaufen.

3. Granulationsanlage nach Anspruch 1, dadurch gekennzeichnet, daß im Hohlraum der Trommel (3) ein Prallblech (21) zum Dispergieren der Granalien und deren Zurückwerfen in den unteren Teil der Trommel (3) vorhanden ist, welche eine Platte darstellt, die in einem nach der Seite zum Granulator (1) hin offenen spitzen Winkel zur Achse der Trommel (3) angeordnet ist.

4. Granulationsanlage nach Anspruch 1, dadurch gekennzeichnet, daß die Vorrichtung (22) zum Austragen der Granalien aus der Trommel (3) eine geneigt angeordnete Schurre (23) hat, deren obererer Teil im Hohlraum der Trommel (3) liegt und der untere Teil nach außen aus der Trommel (3) hinausgeführt ist.

## Revendications

1. Installation pour la granulation d'une fonte métallurgique, qui comporte un granulateur (1) avec un dispositif d'alimentation en eau (13), un chenal (2) pour l'amenée de la fonte métallurgique au granulateur (1) et un tambour (3) avec parois perforées et avec des pales (6) prévues sur sa paroi latérale et s'étendant à l'intérieur, pour le déplacement de la grenaille, qui est mis en rotation, un réservoir d'eau agencé sous le tambour (3), et pourvu d'un déversoir (12), ainsi qu'un dispositif (22) pour l'évacuation de la grenaille hors du tambour (3), caractérisée en ce que le granulateur (1) et le chenal (2) sont agencés à l'intérieur du tambour (3), ainsi la patie inférieure du tambour (3) se trouve dans le réservoir (11) en dessous du déversoir (12).

2. Installation pour la granulation selon la revendication 1, caractérisée en ce que les pales (6) du tambour (3) sont pourvues de fentes (20) qui sont perpendiculaires à l'axe du tambour.

3. Installation pour la granulation selon la revendication 1, caractérisée en ce qu'à l'intérieur du tambour (3) est prévue une chicane (21) pour disperser la grenaille et la retourner à la partie inférieure du tambour (3), qui représente une plaque, qui est agencée à un angle aigu par rapport à l'axe du tambour (3), ouvert vers le côté du granulateur (1).

4. Installation pour la granulation selon la revendication 1, caractérisée en ce que le dispositif (2) pour l'évacuation en ce que le dispositif (22) pout l'évacuation de la grenaille hors du tambour (3) a une goulotte inclinée (23), dont la partie supérieure se trouve à l'intérieur du tambour (3) et dont la partie inférieure sort vers l'extérieur, hors du tambour (3).

## Claims

1. A granulating plant for metallurgical melts, this plant comprising a granulator (1) with a water supply device (13), a channel (2) for supplying the metallurgical melt to the granulator (1), and a drum (3) which is set in rotation, has holed walls and has blades (6) which are attached to its side wall, extend into its interior and are for the displacement of granulated metal, this plant also comprising a water tank (11) which has an overflow (12) and is arranged under the drum (3), and a device (22) for discharging the granulated metal from the drum (3), characterized in that the granulator (1) and the channel (2) are housed in the hollow space of the drum (3), the lower part of the drum (3) being located in the tank (11), below the overflow (12).

2. A granulating plant in accordance with Claim 1, characterized in that the blades (6) of the drum (3) are provided with slits (20) which run at right angles to the drum axis.

3. A granulating plant in accordance with Claim 1, characterized in that in the hollow space of the drum (3) there is a deflector (21) for dispersing the granulated metal and returning it back into the lower part of the drum (3), this deflector being a plate arranged at an acute angle to the axis of the drum, this angle being open towards the side of the granulator (1).

4. A granulating plant in accordance with Claim 1, characterized in that the device (22) for discharging the granulated metal from the drum (3) has a chute (23) which is arranged at an incline, the upper part of the chute lying in the hollow space of the drum (3) and the lower part being guided out of the drum (3) and to the outside.

FIG.1

FIG.2

FIG.3